(19) Europäisches Patentamt
European Patent Office
Office européen des brevets

(11) **EP 2 703 455 A1**

(12) **EUROPEAN PATENT APPLICATION**

(43) Date of publication:
**05.03.2014 Bulletin 2014/10**

(51) Int Cl.:
***C09D 11/00*** (2014.01)     ***C09D 11/02*** (2014.01)

(21) Application number: **12182750.5**

(22) Date of filing: **03.09.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **AGFA GRAPHICS NV**
**2640 Mortsel (BE)**

(72) Inventors:
• **Hoogmartens, Ivan**
  **2640 Mortsel (BE)**
• **Torfs, Rita**
  **2640 Mortsel (BE)**

(54) **Inkjet inks comprising inorganic pigments**

(57)     A colour inkjet ink including an inorganic colour pigment having a colour selected from the group consisting of cyan, magenta, yellow, blue, green, red, orange, violet and brown; and at least 1 wt% of an inorganic colourless pigment based on the total weight of the colour inkjet ink, wherein the inorganic colourless pigment has a smaller average particle size than the inorganic colour pigment.

EP 2 703 455 A1

**Description**

**Technical Field**

The present invention relates to the use and storage and of inorganic colour inkjet inks.

**Background Art**

In inkjet printing, tiny drops of ink fluid are projected directly onto an ink-receiver surface without physical contact between the printing device and the ink-receiver. The printing device stores printing data electronically and controls a mechanism for ejecting the drops image-wise. Printing is accomplished by moving a print head across the ink-receiver or vice versa or both.

Generally, organic pigments are used for obtaining the colour of the inkjet inks. However, inorganic pigments are preferred pigments for some recent inkjet printing applications on outdoor exhibits, pottery, glass, porcelain enamels, baked tiles and the like. Examples of an inorganic colour pigments are oxides, hydroxides, sulfides, ferrocyanides, chromates, carbonates, silicates and phosphates.

For example for obtaining outdoor printed articles superior in warm colour representation and weather resistance, US 2009029119 A (SEIREN) discloses an inkjet ink set comprising an orange pigment ink (a) and a red pigment ink (b), wherein the orange pigment ink (a) comprises iron oxide being an orange pigment and a solvent, and the red pigment ink (b) comprises iron oxide serving as said red pigment; at least one of a pigment selected from condensed polycyclic compound pigments, said at least one of a pigment serving as said red pigment; and a solvent.

A major difference between organic and inorganic pigments is that organic pigments have a much smaller mass density. Organic pigments usually have a mass density between 1 and 2 g/cm , while inorganic pigments have a mass density often larger than 5 g/cm$^3$.

A direct consequence of this difference in mass density is that inkjet inks including inorganic pigments are much more prone to sedimentation problems. Variations in the colour density of the inkjet ink make colour management and true colour reproduction very difficult.

One approach involves the adaptation of the printer hardware involving agitating means for reducing sedimentation. For example, US 2007115329 A (FUJIFILM) discloses the use of a stirrer in the supply vessel of the inkjet ink.

Although the formation of sediment at the bottom of an inorganic inkjet ink container, especially after prolonged storage on a shelf, can often be reversed to a certain degree by shaking or stirring the ink container, it is also observed that some sediment always remains at the bottom of the inorganic inkjet ink container which cannot be redispersed by shaking or stirring. In addition to a loss of raw material, this still leads to consistency problems in inkjet printing since the colour density of a printed layer varies with the concentration of the dispersed inorganic pigment in the inkjet ink.

Therefore, there is still a need for improved inorganic inkjet inks having minor sedimentation problems and improved for redispersing the sediment by shaking or stirring an ink container.

**Summary of invention**

In order to overcome the problems described above, preferred embodiments of the present invention provide an inorganic inkjet ink as claimed in claim 1.

It was surprisingly found, that the addition of a small amount of an inorganic colourless pigment to an inkjet ink including an inorganic colour pigment, wherein the inorganic colourless pigment has a smaller average particle size than the inorganic colour pigment, resulted in both improved sedimentation characteristics and allowed almost full redispersion of inorganic colour pigment sediment by stirring or shaking.

This finding was surprising because the skilled person would have expected that the small particles of an inorganic colourless pigment would fill up the spaces between the larger inorganic colour pigment particles thereby leading to a more compact sediment being more difficult to redisperse. However, surprisingly the contrary was found to be true. The mechanism is not fully understood but it is believed that the underlying principle bears some resemblance to a ball bearing used to reduce rotational friction.

Further objects of the invention will become apparent from the description hereinafter.

**Description of embodiments**

Definitions

The term "alkyl" means all variants possible for each number of carbon atoms in the alkyl group i.e. methyl, ethyl, for three carbon atoms: n-propyl and isopropyl; for four carbon atoms: n-butyl, isobutyl and tertiary-butyl; for five carbon atoms: n-pentyl, 1,1-dimethyl-propyl, 2,2-dimethylpropyl and 2-methyl-butyl, etc.

Unless otherwise specified a substituted or unsubstituted alkyl group is preferably a $C_1$ to $C_6$-alkyl group.

Unless otherwise specified a substituted or unsubstituted alkenyl group is preferably a $C_1$ to $C_6$-alkenyl group.

Unless otherwise specified a substituted or unsubstituted alkynyl group is preferably a $C_1$ to $C_6$-alkynyl group.

Unless otherwise specified a substituted or unsubstituted aralkyl group is preferably a phenyl or naphthyl group including one, two, three or more $C_1$ to $C_6$-alkyl groups.

Unless otherwise specified a substituted or unsubstituted alkaryl group is preferably a $C_7$ to $C_{20}$-alkyl group including a phenyl group or naphthyl group.

Unless otherwise specified a substituted or unsubstituted aryl group is preferably a phenyl group or naphthyl group

Unless otherwise specified a substituted or unsubstituted heteroaryl group is preferably a five- or six-membered ring substituted by one, two or three oxygen atoms, nitrogen atoms, sulphur atoms, selenium atoms or combinations thereof.

The term "substituted" , in e.g. substituted alkyl group means that the alkyl group may be substituted by other atoms than the atoms normally present in such a group, i.e. carbon and hydrogen. For example, a substituted alkyl group may include a halogen atom or a thiol group. An unsubstituted alkyl group contains only carbon and hydrogen atoms

Unless otherwise specified a substituted alkyl group, a substituted alkenyl group, a substituted alkynyl group, a substituted aralkyl group, a substituted alkaryl group, a substituted aryl and a substituted heteroaryl group are preferably substituted by one or more constituents selected from the group consisting of methyl, ethyl, n-propyl, isopropyl, n-butyl, isobutyl and tertiary-butyl, ester, amide, ether, thioether, ketone, aldehyde, sulfoxide, sulfone, sulfonate ester, sulphonamide, -Cl, -Br, -I, -OH, -SH, - CN and -$NO_2$.

Colour Inkjet Inks

A colour inkjet ink in a preferred embodiment of the present invention includes an inorganic colour pigment having a colour selected from the group consisting of cyan, magenta, yellow, blue, green, red, orange, violet and brown; and at least 1 wt% of an inorganic colourless pigment based on the total weight of the colour inkjet ink, wherein the inorganic colourless pigment has a smaller average particle size than the inorganic colour pigment.

The colour inkjet ink includes at least 1.0 wt%, more preferably at least 2.0 wt% of an inorganic, most preferably 2.5 to 8 wt% of the colourless pigment based on the total weight of the colour inkjet ink.

The colour inkjet ink preferably includes up to 15 wt%, more preferably 1 to 10 wt% and most preferably 2 to 8 wt% of the an inorganic colour pigment based on the total weight of the colour inkjet ink.

In a preferred embodiment of the colour inkjet ink, the inorganic colourless pigment has an average particle size smaller than 150 nm, more preferably between 50 and 130 nm as determined by photon correlation spectroscopy.

In a preferred embodiment of the colour inkjet ink, the inorganic colour pigment has an average particle size smaller than 250 nm as determined by photon correlation spectroscopy.

The colour inkjet ink is preferably a colour inkjet ink curable by UV radiation or e-beam radiation.

The static surface tension of the colour inkjet ink is preferably from 20 to 40 mN/m, more preferably from 22 to 35 mN/m. It is preferably 20 mN/m or more from the viewpoint of printability by another colour inkjet ink, and it is preferably not more than 30 mN/m from the viewpoint of the wettability of the ink-receiving substrate.

The colour inkjet ink preferably also contains at least one surfactant so that the dynamic surface tension is no more than 30 mN/m measured by maximum bubble pressure tensiometry at a surface age of 50 ms and at 25° C.

For having a good ejecting ability and fast inkjet printing, the viscosity of the colour inkjet ink at the temperature of 40° C is smaller than 15 mPa.s, preferably smaller than 12 mPa.s, and more preferably between 1 and 10 mPa.s all at a shear rate of 1,000 $s^{-1}$. A preferred jetting temperature is between 10 and 70° C, more preferably between 25 and 50° C, and most preferably between 35 and 45° C.

The colour inkjet ink is preferably part of an inkjet ink set. Such an inkjet ink set preferably includes at least one yellow ink (Y), at least one cyan ink (C) and at least one magenta ink (M) and preferably also at least one black ink (K). The CMYK-ink set may also be extended with extra inks such as red, green, blue, green and/or orange to further enlarge the colour gamut. The CMYK ink set may also be extended by the combination of full density inkjet inks with light density inkjet inks. The combination of dark and light colour inks and/or black and grey inks improves the image quality by a lowered graininess.

Inorganic Colour Pigments

The inorganic colour pigment has a colour selected from the group consisting of cyan, magenta, yellow, blue, green, red, orange, violet and brown.

In a preferred embodiment of the colour inkjet ink, the inorganic colour pigment is selected from the group consisting of oxides, hydroxides, sulfides, ferrocyanides, chromates, carbonates, silicates and phosphates.

Preferred inorganic colour pigments include chromium oxide, chromium oxide hydrate green, chromium green, cobalt green, ultramarine green, cobalt blue, ultramarine blue, manganese blue, ultramarine violet, cobalt and manganese violet, red iron oxide, cadmium sulfoselenide, cerium sulfide, molybdate red, ultramarine red brown iron oxide, mixed brown, spinel phases and corundum phases, chrome titanium yellow, chrome orange, cerium sulfide, yellow iron oxide, nickel titanium , chrome titanium yellow, spinel phases, cadmium sulfide and cadmium zinc sulfide, chromium yellow, bismuth vanadate. cerium sulfide, molybdate red, and ultramarine red.

In a preferred embodiment of the colour inkjet ink, the inorganic colour pigment is selected from the group consisting of C.I. Pigment Blue 28, C.I. Pigment Blue 36, Pigment Blue 72, C.I. Pigment Yellow 34, C.I. Pigment Yellow 35, C.I. Pigment Yellow 37, C.I. Pigment Yellow 42, C.I. Pigment Yellow 53, C.I. Pigment Yellow 119, C.I. Pigment Yellow 157, C.I. Pigment Yellow 158, C.I. Pigment Yellow 159, C.I. Pigment Yellow 160, C.I. Pigment Yellow 161, C.I. Pigment Yellow 162, C.I. Pigment Yellow 163, C.I. Pigment Yellow 164, C.I. Pigment Yellow 184, C.I. Pigment Yellow 189, C.I. Pigment Red 101, C.I. Pigment Red 102, C.I. Pigment Red 104, C.I. Pigment Red 108, C.I. Pigment Red 265, C.I. Pigment Green 48, C.I. Pigment Green 50, C.I. Pigment Brown 6, C.I. Pigment Brown 7, C.I Pigment Brown 24, C.I. Pigment Brown 29, C.I. Pigment Brown 31, C.I. Pigment Brown 33, C.I. Pigment Brown 34, C.I. Pigment Brown 35, C.I. Pigment Brown 37, C.I. Pigment Brown 39, C.I. Pigment Brown 40, C.I. Pigment Brown 43, C.I Pigment Orange 20, C.I. Pigment Orange 75 and C.I. Pigment Green 50.

Also mixtures of inorganic colour pigments may be used. For example, the colour inkjet ink includes a black pigment and at least one pigment selected from the group consisting of a blue pigment, a cyan pigment, magenta pigment and a red pigment. It was found that such a black inkjet ink was better readable and scannable on a transparent substrate.

The inorganic colourless pigment also improves the redispersibility in inkjet inks of most inorganic black colour pigments such as black iron oxide (C.I. Pigment Black 11), iron manganese black, spinel black (C.I. Pigment Black 27) and black $Cu(Cr,Fe)_2O_4$ (C.I. Pigment black 28). Sometimes carbon black (C.I. Pigment Black 7) is also considered to be an inorganic pigment, but carbon black consists of carbon. Because carbon black has a mass density of less than 2 $g/cm^3$, it does not exhibit the sedimentation and redispersability problems of a metal ion containing inorganic black pigments like e.g. black iron oxide. Consequently, there is no improvement in redispersability noticeable by an inorganic colourless pigment for a carbon black inkjet ink.

Pigment particles in inkjet inks should be sufficiently small to permit free flow of the ink through the inkjet-printing device, especially at the ejecting nozzles. It is also desirable to use small particles for maximum colour strength and to slow down sedimentation.

The numeric average pigment particle size is preferably between 0.050 and 1 $\mu$ m, more preferably between 0.070 and 0.300 $\mu$ m and particularly preferably between 0.080 and 0.250 $\mu$ m. Most preferably, the numeric average pigment particle size is no larger than 0.200 $\mu$ m. An average particle size smaller than 0.050 $\mu$ m is less desirable for decreased colour fastness.

The pigments are preferably present in the range of 0.01 to 15 %, more preferably in the range of 0.05 to 10 % by weight and most preferably in the range of 0.1 to 8 % by weight, each based on the total weight of the colour inkjet ink.

Inorganic Colourless Pigments

The inorganic colourless pigment has a smaller average particle size than the inorganic colour pigment.

The inorganic colourless pigment is preferably a pigment with a refractive index greater than 1.60, more preferably greater than 2.00 and most preferably greater than 2.50.

The inorganic colourless pigment is preferably selected from the group consisting of titanium dioxide, zinc oxide, zinc sulfide, lead sulfate, antimony trioxide, kaolin, barium carbonate, zirconium oxide, calcium carbonate, barium sulfate, calcium sulfate, aluminium hydroxide, aluminium oxide, silicon dioxide, calcium phosphate, lithopone, zinc sulfide, magnesium sulfate, zinc phosphate, bismuth subnitrate, bismuth oxychloride, lead hydroxide carbonate and calcium metasilicate.

In a preferred embodiment, titanium dioxide is used for the inorganic colourless pigment.

There is no real limitation on the shape of the inorganic colourless pigment. It can be spherical, but preferably the inorganic colourless pigment has a platelet or needle shape.

Dispersants

The pigments are preferably dispersed in a liquid ink vehicle by a polymeric dispersant. The polymeric dispersants here below are suitable for both the inorganic colour and colourless pigments.

Suitable polymeric dispersants are copolymers of two monomers but they may contain three, four, five or even more monomers. The properties of polymeric dispersants depend on both the nature of the monomers and their distribution in the polymer. Copolymeric dispersants preferably have the following polymer compositions:

· statistically polymerized monomers (e.g. monomers A and B polymerized into ABBAABAB);
· alternating polymerized monomers (e.g. monomers A and B polymerized into ABABABAB);
· gradient (tapered) polymerized monomers (e.g. monomers A and B polymerized into AAABAABBABBB);
· block copolymers (e.g. monomers A and B polymerized into AAAAABBBBBB) wherein the block length of each of the blocks (2, 3, 4, 5 or even more) is important for the dispersion capability of the polymeric dispersant;
· graft copolymers (graft copolymers consist of a polymeric backbone with polymeric side chains attached to the backbone); and
· mixed forms of these polymers, e.g. blocky gradient copolymers.

Suitable polymeric dispersants are listed in the section on "Dispersants", more specifically [0064] to [0070] and [0074] to [0077], in EP 1911814 A (AGFA GRAPHICS).

The polymeric dispersant has preferably a number average molecular weight Mn between 500 and 30000, more preferably between 1500 and 10000.

The polymeric dispersant has preferably a weight average molecular weight Mw smaller than 100,000, more preferably smaller than 50,000 and most preferably smaller than 30,000.

The polymeric dispersant has preferably a polydispersity PD smaller than 2, more preferably smaller than 1.75 and most preferably smaller than 1.5.

Commercial examples of polymeric dispersants are the following:

· DISPERBYK™ dispersants available from BYK CHEMIE GMBH;
· SOLSPERSE™ dispersants available from NOVEON;
· TEGO™ DISPERS™ dispersants from EVONIK;
· EDAPLAN™ dispersants from MÜNZING CHEMIE;
· ETHACRYL™ dispersants from LYONDELL;
· GANEX™ dispersants from ISP;
· DISPEX™ and EFKA™ dispersants from CIBA SPECIALTY CHEMICALS INC;
· DISPONER™ dispersants from DEUCHEM; and
· JONCRYL™ dispersants from JOHNSON POLYMER.

Particularly preferred polymeric dispersants include Solsperse™ dispersants from NOVEON, Efka™ dispersants from CIBA SPECIALTY CHEMICALS INC and Disperbyk™ dispersants from BYK CHEMIE GMBH. Particularly preferred dispersants are Solsperse™ 32000, 35000, 36000 and 39000 dispersants from NOVEON.

The polymeric dispersant is preferably used in an amount of 2 to 600 wt%, more preferably 5 to 200 wt%, most preferably 50 to 90 wt% based on the weight of the pigment.

Liquid Ink Vehicles

The liquid ink vehicle of the colour inkjet ink can be aqueous or non-aqueous, but is preferably non-aqueous. In an industrial inkjet printing environment, aqueous inkjet inks tend to suffer more from latency problems than non-aqueous inkjet inks. The non-aqueous inkjet inks include organic solvent based, oil based and radiation curable ink vehicles. Oil based inkjet inks tend to have higher viscosity, thereby slowing down inkjet printing speeds. In the most preferred embodiment, the colour inkjet ink is a radiation curable colour inkjet ink, since such an inkjet ink curable by UV radiation or electron beam radiation can also be applied to a substantially non-absorbing ink receiver. The colour inkjet ink is most preferably curable by UV radiation because in contrast to e-beam, UV radiation allows for fast pincuring.

Suitable organic solvents include alcohols, aromatic hydrocarbons, ketones, esters, aliphatic hydrocarbons, higher fatty acids, carbitols, cellosolves, higher fatty acid esters. Suitable alcohols include methanol, ethanol, propanol and 1-butanol, 1-pentanol, 2-butanol, t.-butanol. Suitable aromatic hydrocarbons include toluene, and xylene. Suitable ketones include methyl ethyl ketone, methyl isobutyl ketone, 2,4-pentanedione and hexafluoroacetone. Also glycol, glycolethers, N-methylpyrrolidone, N,N-dimethylacetamid, N, N-dimethylformamid may be used.

Preferred examples of organic solvents are disclosed in [0133] to [0146] of EP 1857510 A (AGFA GRAPHICS).

In a radiation curable inkjet ink, organic solvent(s) are preferably fully replaced by one or more monomers and/or oligomers to obtain the liquid dispersion medium. Sometimes, it can be advantageous to add a small amount of an organic solvent to improve the dissolution of the dispersant. The content of organic solvent should be lower than 20 wt%, more preferably lower than 5 wt% based on the total weight of the inkjet ink and most preferably the curable inkjet ink doesn't include any organic solvent.

For oil based inkjet inks, the ink vehicle may include any suitable oil including aromatic oils, paraffinic oils, extracted paraffinic oils, naphthenic oils, extracted napthenic oils, hydrotreated light or heavy oils, vegetable oils and derivatives and mixtures thereof. Paraffinic oils can be normal paraffin types (octane and higher alkanes), isoparaffins (isooctane and higher iso-alkanes) and cycloparaffins (cyclooctane and higher cycloalkanes) and mixtures of paraffin oils.

Suitable examples of oils are disclosed in [0151] to [0164] of EP 1857510 A (AGFA GRAPHICS).

Polymerizable compounds

A radiation curable colour inkjet ink contains polymerizable compounds preferably in an amount higher than 60 wt%, more preferably in an amount preferably higher than 70 wt% based on the total weight of the inkjet ink.

Any polymerizable compound commonly known in the art may be employed and includes any monomer, oligomer and/or prepolymer as long it allows obtaining a viscosity suitable for inkjet printing. A combination of monomers, oligomers and/or prepolymers may also be used. The monomers, oligomers and/or prepolymers may possess different degrees of functionality, and a mixture including combinations of mono-, di-, tri-and higher functionality monomers, oligomers and/or prepolymers may be used. The viscosity of the inkjet ink can be adjusted by varying the ratio between the monomers and oligomers.

Any method of conventional radical polymerization, photo-curing system using photo acid or photo base generator, or photo induction alternating copolymerization may be employed. In general, radical polymerization and cationic polymerization are preferred, and photo induction alternating copolymerization needing no initiator may also be employed. Furthermore, a hybrid system of combinations of these systems is also effective.

Cationic polymerization is superior in effectiveness due to lack of inhibition of the polymerization by oxygen, however it is expensive and slow, especially under conditions of high relative humidity. If cationic polymerization is used, it is preferred to use an epoxy compound together with an oxetane compound to increase the rate of polymerization.

The radiation curable colour inkjet inks in a preferrred embodiment of the present invention are free radical polymerizable. It was found in industrial inkjet printing systems that cationically curable inkjet inks posed problems of jetting reliability due to UV stray light. UV stray light hitting the nozzle plate of an inkjet print head results into failing nozzles due to clogging by cured ink in the nozzle. Unlike free radical ink where radical species have a much shorter lifetime, the cationic curable ink continues to cure once an acid species has been generated by UV light in the nozzle.

Particularly preferred monomers and oligomers are those listed in [0106] to [0115] of EP 1911814 A (AGFA GRAPHICS) .

The cationically polymerizable compound of the inkjet ink can be one or more monomers, one or more oligomers or a combination thereof.

Suitable examples of cationically curable compounds can be found in Advances in Polymer Science, 62, pages 1 to 47 (1984) by J. V. Crivello.

The cationic curable compound may contain at least one olefin, thioether, acetal, thioxane, thietane, aziridine, N-, O-, S- or P-heterocycle, aldehyde, lactam or cyclic ester group.

Examples of cationic polymerizable compounds include monomers and/or oligomers epoxides, vinyl ethers, styrenes, oxetanes, oxazolines, vinyl naphthalenes, N-vinyl heterocyclic compounds, tetrahydrofurfuryl compounds.

The cationically polymerizable monomer can be mono-, di- or multifunctional or a mixture thereof.

A preferred class of monomers and oligomers which can be used in both radiation and cationically curable compositions are vinyl ether (meth)acrylates such as those described in US 6310115 (AGFA) , incorporated herein by reference. Particularly preferred compounds are 2-(2-vinyloxyethoxy)ethyl (meth)acrylate, most preferably the compound is 2-(2-vinyloxyethoxy)ethyl acrylate.

In a preferred embodiment, the colour inkjet ink includes 2-(2-vinyloxyethoxy)ethyl (meth)acrylate because this monomer allows obtaining very low viscosities at jetting temperatures.

The monomers and oligomers used in the radiation curable inkjet ink are preferably purified compounds having no or almost no impurities, more particularly no toxic or carcinogenic impurities. The impurities are usually derivative compounds obtained during synthesis of the polymerizable compound. Sometimes, however, some compounds may be added deliberately to pure polymerizable compounds in harmless amounts, for example, polymerization inhibitors or stabilizers.

The colour inkjet ink preferably includes N-vinylcaprolactam, because this monomer becomes solid at room temperature and reduces the sedimentation due to the higher viscosity of the more concentrated inkjet ink.

The radiation curable colour inkjet ink is preferably a non-aqueous ink. The term "non-aqueous" refers to a liquid carrier which should contain no water. However sometimes a small amount, generally less than 5 wt% of water based on the total weight of the composition or ink, can be present. This water was not intentionally added but came into the composition via other components as a contamination, such as for example polar organic solvents. Higher amounts of water than 5 wt% tend to make the non-aqueous liquids and inks instable, preferably the water content is less than 1 wt% based on the total weight of radiation curable colour inkjet ink and most preferably no water at all is present

The radiation curable colour inkjet ink preferably does not contain an organic solvent. But sometimes it can be advantageous to incorporate a small amount of an organic solvent to improve adhesion to the surface of a ink-receiver after UV-curing. In this case, the added solvent can be any amount in the range that does not cause problems of solvent resistance and VOC, and preferably 0.1 - 10.0 wt%, and particularly preferably 0.1 - 5.0 wt%, each based on the total weight of the curable ink.

The radiation curable inkjet ink preferably includes at least one polymerization inhibitor for improving the thermal stability of the ink.

Initiators

The radiation curable inkjet ink preferably also contains an initiator. The initiator typically initiates the polymerization reaction. The initiator can be a thermal initiator, but is preferably a photo-initiator. The photo-initiator requires less energy to activate than the monomers, oligomers and/or prepolymers to form a polymer. The photo-initiator in the curable inkjet ink is preferably a Norrish type I initiator, a Norrish type II initiator or a photoacid generator. A combination of different types of initiator, for example, a photo-initiator and a thermal initiator can also be used.

Thermal initiator(s) suitable for use in the curable inkjet ink include tert-amyl peroxybenzoate, 4,4-azobis(4-cyanovaleric acid), 1,1'-azobis(cyclohexanecarbonitrile), 2,2'-azobisisobutyronitrile (AIBN), benzoyl peroxide, 2,2-bis( tert-butylperoxy)butane, 1,1-bis( tert-butylperoxy)cyclohexane,1,1-bis( tert-butylperoxy)cyclohexane, 2,5-bis( tert-butylperoxy)-2,5-dimethylhexane, 2,5-bis( tert-butylperoxy)-2,5-dimethyl-3-hexyne, bis(1-( tert-butylperoxy)-1-methylethyl)benzene, 1,1-bis( tert-butylperoxy)-3,3,5-trimethylcyclohexane, tert-butyl hydroperoxide, tert-butyl peracetate, tert-butyl peroxide, tert-butyl peroxybenzoate, tert-butylperoxy isopropyl carbonate, cumene hydroperoxide, cyclohexanone peroxide, dicumyl peroxide, lauroyl peroxide, 2,4- pentanedione peroxide, peracetic acid and potassium persulfate.

In a preferred embodiment, the photoinitiator is a free radical initiator. A free radical photoinitiator is a chemical compound that initiates polymerization of monomers and oligomers when exposed to actinic radiation by the formation of a free radical. A Norrish Type I initiator is an initiator which cleaves after excitation, yielding the initiating radical immediately. A Norrish type II-initiator is a photoinitiator which is activated by actinic radiation and forms free radicals by hydrogen abstraction from a second compound that becomes the actual initiating free radical. This second compound is called a polymerization synergist or co-initiator. Both type I and type II photoinitiators can be used in the present invention, alone or in combination.

Suitable photo-initiators are disclosed in CRIVELLO, J.V., et al. VOLUME III: Photoinitiators for Free Radical Cationic. 2nd edition. Edited by BRADLEY, G.. London,UK: John Wiley and Sons Ltd, 1998. p.287-294.

Specific examples of photo-initiators may include, but are not limited to, the following compounds or combinations thereof: benzophenone and substituted benzophenones, 1-hydroxycyclohexyl phenyl ketone, thioxanthones such as isopropylthioxanthone, 2-hydroxy-2-methyl-1-phenylpropan-1-one, 2-benzyl-2-dimethylamino- (4-morpholinophenyl) butan-1-one, benzil dimethylketal, bis (2,6- dimethylbenzoyl) -2,4, 4-trimethylpentylphosphine oxide, 2,4,6trimethylbenzoyldiphenylphosphine oxide, 2-methyl-1- [4- (methylthio) phenyl] -2-morpholinopropan-1-one, 2,2-dimethoxy-1, 2-diphenylethan-1-one or 5,7-diiodo-3- butoxy-6-fluorone.

Suitable commercial photo-initiators include Irgacure™ 184, Irgacure™ 500, Irgacure™ 907, Irgacure™ 369, Irgacure™ 1700, Irgacure™ 651, Irgacure™ 819, Irgacure™ 1000, Irgacure™ 1300, Irgacure™ 1870, Darocur™ 1173, Darocur™ 2959, Darocur™ 4265 and Darocur™ ITX available from CIBA SPECIALTY CHEMICALS, Lucerin™ TPO available from BASF AG, Esacure™ KT046, Esacure™ KIP150, Esacure™ KT37 and Esacure™ EDB available from LAMBERTI, H-Nu™ 470 and H-Nu™ 470X available from SPECTRA GROUP Ltd..

For safety reasons, the photoinitiator is preferably a so-called diffusion hindered photoinitiator. A diffusion hindered photoinitiator is a photoinitiator which exhibits a much lower mobility in a cured layer of the inkjet ink than a monofunctional photoinitiator, such as benzophenone. Several methods can be used to lower the mobility of the photoinitiator. One way is to increase the molecular weight of the photoinitiator so that the diffusion speed is reduced, e.g. polymeric photoinitiators. Another way is to increase its reactivity so that it is built into the polymerizing network, e.g. multifunctional photoinitiators (having 2, 3 or more photoinitiating groups) and polymerizable photoinitiators. The diffusion hindered photoinitiator is preferably selected from the group consisting of non-polymeric multifunctional photoinitiators, oligomeric or polymeric photoinitiators and polymerizable photoinitiators. Non-polymeric di- or multifunctional photoinitiators are considered to have a molecular weight between 300 and 900 Dalton. Non-polymerizable monofunctional photoinitiators with a molecular weight in that range are not diffusion hindered photoinitiators. Most preferably the diffusion hindered photoinitiator is a polymerizable initiator.

A suitable diffusion hindered photoinitiator may contain one or more photoinitiating functional groups derived from a Norrish type I-photoinitiator selected from the group consisting of benzoinethers, benzil ketals, α, α -dialkoxyacetophenones, α -hydroxyalkylphenones, α -aminoalkylphenones, acylphosphine oxides, acylphosphine sulfides, α-haloketones, α-halosulfones and phenylglyoxalates.

A suitable diffusion hindered photoinitiator may contain one or more photoinitiating functional groups derived from a Norrish type II-initiator selected from the group consisting of benzophenones, thioxanthones, 1,2-diketones and anthraquinones.

Suitable diffusion hindered photoinitiators are also those disclosed in EP 2065362 A (AGFA) in paragraphs [0074] and [0075] for difunctional and multifunctional photoinitiators, in paragraphs [0077] to [0080] for polymeric photoinitiators and in paragraphs [0081] to [0083] for polymerizable photoinitiators.

Other preferred polymerizable photoinitiators are those disclosed in EP 2065362 A (AGFA) and EP 2161264 A (AGFA).

A preferred amount of photoinitiator is 0 - 50 wt%, more preferably 0.1 - 20 wt%, and most preferably 0.3 - 15 wt% of the total weight of the curable pigment dispersion or ink.

In order to increase the photosensitivity further, the radiation curable colour inkjet ink may additionally contain co-initiators. Suitable examples of co-initiators can be categorized in three groups:

(1) tertiary aliphatic amines such as methyldiethanolamine, dimethylethanolamine, triethanolamine, triethylamine and N-methylmorpholine;

(2) aromatic amines such as amylparadimethylaminobenzoate, 2-n-butoxyethyl-4-(dimethylamino) benzoate, 2-(dimethylamino)ethylbenzoate, ethyl-4-(dimethylamino)benzoate, and 2-ethylhexyl-4-(dimethylamino)benzoate; and

(3) (meth)acrylated amines such as dialkylamino alkyl(meth)acrylates (e.g., diethylaminoethylacrylate) or N-morpholinoalkyl-(meth)acrylates (e.g., N-morpholinoethyl-acrylate).

The preferred co-initiators are aminobenzoates.

When one or more co-initiators are included into the radiation curable ink, preferably these co-initiators are diffusion hindered for safety reasons.

A diffusion hindered co-initiator is preferably selected from the group consisting of non-polymeric di- or multifunctional co-initiators, oligomeric or polymeric co-initiators and polymerizable co-initiators. More preferably the diffusion hindered co-initiator is selected from the group consisting of polymeric co-initiators and polymerizable co-initiators. Most preferably the diffusion hindered co-initiator is a polymerizable co-initiator having at least one (meth)acrylate group, more preferably having at least one acrylate group.

Preferred diffusion hindered co-initiators are the polymerizable co-initiators disclosed in EP 2053101 A (AGFA GRAPHICS) in paragraphs [0088] and [0097].

Preferred diffusion hindered co-initiators include a polymeric co-initiator having a dendritic polymeric architecture, more preferably a hyperbranched polymeric architecture. Preferred hyperbranched polymeric co-initiators are those disclosed in US 2006014848 (AGFA).

The radiation curable ink preferably comprises the diffusion hindered co-initiator in an amount of 0.1 to 50 wt%, more preferably in an amount of 0.5 to 25 wt%, most preferably in an amount of 1 to 10 wt% of the total weight of the ink.

Polymerization Inhibitors

The radiation curable colour inkjet ink may contain a polymerization inhibitor. Suitable polymerization inhibitors include phenol type antioxidants, hindered amine light stabilizers, phosphor type antioxidants, hydroquinone monomethyl ether commonly used in (meth)acrylate monomers, and hydroquinone, t-butylcatechol, pyrogallol may also be used.

Suitable commercial inhibitors are, for example, Sumilizer™ GA-80, Sumilizer™ GM and Sumilizer™ GS produced by Sumitomo Chemical Co. Ltd.; Genorad™ 16, Genorad™ 18 and Genorad ™ 20 from Rahn AG; Irgastab™ UV10 and Irgastab™ UV22, Tinuvin™ 460 and CGS20 from Ciba Specialty Chemicals; Floorstab™ UV range (UV-1, UV-2, UV-5 and UV-8) from Kromachem Ltd, Additol™ S range (S100, S110, S120 and S130) from Cytec Surface Specialties.

Since excessive addition of these polymerization inhibitors will lower the ink sensitivity to curing, it is preferred that the amount capable of preventing polymerization is determined prior to blending. The amount of a polymerization inhibitor is preferably lower than 2 wt% of the total inkjet ink.

Surfactants

Surfactants are known for use in inkjet inks to reduce the surface tension of the ink in order to reduce the contact angle on the ink-receiver, i.e. to improve the wetting of the ink-receiver by the ink. On the other hand, the jettable ink must meet stringent performance criteria in order to be adequately jettable with high precision, reliability and during an extended period of time. To achieve both wetting of the ink-receiver by the ink and high jetting performance, typically, the surface tension of the ink is reduced by the addition of one or more surfactants. In the case of radiation curable inkjet inks, however, the surface tension of the inkjet ink is not only determined by the amount and type of surfactant, but also by the polymerizable compounds, the polymeric dispersants and other additives in the ink composition.

The surfactant(s) can be anionic, cationic, non-ionic, or zwitter-ionic and are usually added in a total quantity less than 20 wt% based on the total weight of the inkjet ink and particularly in a total less than 10 wt% based on the total weight of the inkjet ink.

Suitable surfactants include fluorinated surfactants, fatty acid salts, ester salts of a higher alcohol, alkylbenzene sulphonate salts, sulphosuccinate ester salts and phosphate ester salts of a higher alcohol (for example, sodium dodecylbenzenesulphonate and sodium dioctylsulphosuccinate), ethylene oxide adducts of a higher alcohol, ethylene oxide adducts of an alkylphenol, ethylene oxide adducts of a polyhydric alcohol fatty acid ester, and acetylene glycol and ethylene oxide adducts thereof (for example, polyoxyethylene nonylphenyl ether, and SURFYNOL™ 104, 104H, 440, 465 and TG available from AIR PRODUCTS & CHEMICALS INC.).

Preferred surfactants include fluoro surfactants (such as fluorinated hydrocarbons) and silicone surfactants. The silicones are typically siloxanes and can be alkoxylated, polyether modified, polyester modified, polyether modified hydroxy functional, amine modified, epoxy modified and other modifications or combinations thereof. Preferred siloxanes are polymeric, for example polydimethylsiloxanes.

The fluorinated or silicone compound used as a surfactant may be a polymerizable surfactant. Suitable copolymerizable compounds having surface-active effects include, for example, polyacrylate copolymers, silicone modified acrylates, silicone modified methacrylates, acrylated siloxanes, polyether modified acrylic modified siloxanes, fluorinated acrylates, and fluorinated methacrylate. These acrylates can be mono-, di- , tri- or higher functional (meth)acrylates.

Depending upon the application a surfactant can be used with a high, low or intermediate dynamic surface tension. Silicone surfactants are generally known to have low dynamic surface tensions while fluorinated surfactants are known to have higher dynamic surface tensions.

Silicone surfactants are often preferred in curable inkjet inks, especially the reactive silicone surfactants, which are able to be polymerized together with the polymerizable compounds during the curing step.

Examples of useful commercial silicone surfactants are those supplied by BYK CHEMIE GMBH (including Byk™-302, 307, 310, 331, 333, 341, 345, 346, 347, 348, UV3500, UV3510 and UV3530), those supplied by TEGO CHEMIE SERVICE (including Tego™ Rad 2100, 2200N, 2250, 2300, 2500, 2600 and 2700), Ebecryl™ 1360 a polysilixone hexaacrylate from CYTEC INDUSTRIES BV and Efka™-3000 series (including Efka™-3232 and Efka™-3883) from EFKA CHEMICALS B.V..

Preparation of Inkjet Inks

The preparation of pigmented radiation curable inkjet inks is well-known to the skilled person. Preferred methods of preparation are disclosed in paragraphs [0076] to [0085] of WO 2011/069943 (AGFA).

Inkjet Printing Methods

A method of inkjet printing in a preferred embodiment of the present invention includes the steps of: a) feeding an inkjet printhead with a colour inkjet ink including an inorganic colour pigment having a colour selected from the group consisting of cyan, magenta, yellow, blue, green, red, orange, violet and brown; and at least 1 wt% of an inorganic colourless pigment based on the total weight of the colour inkjet ink, wherein the inorganic colourless pigment has a smaller average particle size than the inorganic colour pigment; and b) jetting the colour inkjet ink with the inkjet printhead on an ink-receiver.

In a preferred embodiment of the inkjet printing method, the colour inkjet ink includes at least 2 wt% of an inorganic colourless pigment and up to 15 wt% an inorganic colour pigment both based on the total weight of the colour inkjet ink.

The inkjet printing method preferably uses a colour inkjet ink wherein the inorganic colourless pigment has an average particle size smaller than 150 nm as determined by photon correlation spectroscopy.

In a preferred embodiment of the inkjet printing method, the inkjet printhead is a throughflow inkjet printhead.

In a preferred embodiment of the inkjet printing method, the colour inkjet ink in the ink-container is agitated.

The inkjet printing method preferably includes a step c) of at least partially curing the jetted colour inkjet ink with UV radiation.

Inkjet Printing Devices

The colour inkjet inks may be jetted by one or more print heads ejecting small droplets in a controlled manner through nozzles onto a ink-receiver, which is moving relative to the print head(s).

A preferred print head for the inkjet printing system is a piezoelectric head. Piezoelectric inkjet printing is based on the movement of a piezoelectric ceramic transducer when a voltage is applied thereto. The application of a voltage changes the shape of the piezoelectric ceramic transducer in the print head creating a void, which is then filled with ink. When the voltage is again removed, the ceramic expands to its original shape, ejecting a drop of ink from the print head. However the inkjet printing method according to the present invention is not restricted to piezoelectric inkjet printing.

Other inkjet print heads can be used and include various types, such as a continuous type.

The inkjet print head normally scans back and forth in a transversal direction across the moving ink-receiver surface. Often the inkjet print head does not print on the way back. Bi-directional printing is preferred for obtaining a high areal throughput. Another preferred printing method is by a "single pass printing process" , which can be performed by using page wide inkjet print heads or multiple staggered inkjet print heads which cover the entire width of the ink-receiver surface. In a single pass printing process the inkjet print heads usually remain stationary and the ink-receiver surface is transported under the inkjet print heads.

Curing Devices

The radiation curable colour inkjet in a preferred embodiment according to the present invention is cured by exposing them to actinic radiation, preferably by ultraviolet radiation.

In inkjet printing, the curing means may be arranged in combination with the print head of the inkjet printer, travelling therewith so that the curable liquid is exposed to curing radiation very shortly after been jetted.

In such an arrangement it can be difficult to provide a small enough radiation source connected to and travelling with the print head, such as LED. Therefore, a static fixed radiation source may be employed, e.g. a source of curing UV-light, connected to the radiation source by means of flexible radiation conductive means such as a fiber optic bundle or an internally reflective flexible tube.

Alternatively, the actinic radiation may be supplied from a fixed source to the radiation head by an arrangement of mirrors including a mirror upon the radiation head.

The source of radiation may also be an elongated radiation source extending transversely across the ink-receiver to be cured. It may be adjacent the transverse path of the print head so that the subsequent rows of images formed by the print head are passed, stepwise or continually, beneath that radiation source.

Any ultraviolet light source, as long as part of the emitted light can be absorbed by the photo-initiator or photo-initiator system, may be employed as a radiation source, such as, a high or low pressure mercury lamp, a cold cathode tube, a black light, an ultraviolet LED, an ultraviolet laser, and a flash light. Of these, the preferred source is one exhibiting a relatively long wavelength UV-contribution having a dominant wavelength of 300-400 nm. Specifically, a UV-A light source is preferred due to the reduced light scattering therewith resulting in more efficient interior curing.

UV radiation is generally classed as UV-A, UV-B, and UV-C as follows:

· UV-A: 400 nm to 320 nm

· UV-B: 320 nm to 290 nm

· UV-C: 290 nm to 100 nm.

In a preferred embodiment, the inkjet printing device contains one or more UV LEDs with a wavelength larger than 360 nm, preferably one or more UV LEDs with a wavelength larger than 380 nm, and most preferably UV LEDs with a wavelength of about 395 nm.

Furthermore, it is possible to cure the image using, consecutively or simultaneously, two light sources of differing wavelength or illuminance. For example, the first UV-source can be selected to be rich in UV-C, in particular in the range of 260 nm-200 nm. The second UV-source can then be rich in UV-A, e.g. a gallium-doped lamp, or a different lamp high in both UV-A and UV-B. The use of two UV-sources has been found to have advantages e.g. a fast curing speed and a high curing degree.

For facilitating curing, the inkjet printing device often includes one or more oxygen depletion units. The oxygen depletion units place a blanket of nitrogen or other relatively inert gas (e.g. $CO_2$), with adjustable position and adjustable inert gas concentration, in order to reduce the oxygen concentration in the curing environment. Residual oxygen levels are usually maintained as low as 200 ppm, but are generally in the range of 200 ppm to 1200 ppm.

Ink-receivers

There is no real limitation on the type of ink-receiver. The ink-receivers may have ceramic, metallic or polymeric surfaces for printing.

The ink-receiver may be porous, as e.g. textile, paper and card board ink-receivers, or substantially non-absorbing ink-receivers such as e.g. a ink-receiver having a polyethyleneterephthalate surface.

Preferred polymeric ink-receivers including surfaces of polyethylene, polypropylene, polycarbonate, polyvinyl chloride, polyesters like polyethylene terephthalate (PET), polyethylene naphthalate (PEN) and polylactide (PLA) and polyimide.

The ink-receiver may also be a paper ink-receiver, such as plain paper or resin coated paper, e.g. polyethylene or polypropylene coated paper. There is no real limitation on the type of paper and it includes newsprint paper, magazine paper, office paper, wallpaper but also paper of higher grammage, usually referred to as boards, such as white lined chipboard, corrugated board and packaging board.

The ink-receivers may be transparent, translucent or opaque. Preferred opaque ink-receivers includes so-called synthetic paper, like the Synaps™ grades from Agfa-Gevaert which are an opaque polyethylene terephthalate sheet having a density of 1.10 g/cm$^3$ or more.

There is no restriction on the shape of the ink-receiver. It can be a flat sheet, such a paper sheet or a polymeric film or it can also be a three dimensional object like e.g. a metallic jerrycan.

The three dimensional object can also be a container like a bottle or a jerry-can for including e.g. oil, shampoo, insecticides, pesticides, solvents, paint thinner or other type of liquids.

In a preferred embodiment of the inkjet printing method, the ink-receiver has a printing surface made of metal, glass, stone, concrete or ceramics.

## EXAMPLES

Materials

All materials used in the examples were readily available from standard sources such as Sigma-Aldrich (Belgium) and Acros (Belgium) unless otherwise specified.

**PY184** is C.I. Pigment Yellow 184, a bismuth-vanadium oxide pigment available as Irgacolor™ Yellow 2GTM from CIBA.

**PB28** is C.I. Pigment Blue 28, a cobalt(II) oxide-aluminum oxide pigment available as V-9250 Bright Blue from FERRO Corporation.

**RM300** is Hombitec™ RM300, a titanium dioxide having a specific surface of 70 m$^2$/g available from SACHTLE-BEN CHEMIE GmbH, a company of ROCKWOOD SPECIALTIES GROUP.

**DB162** is an abbreviation used for the polymeric dispersant Disperbyk™ 162 available from BYK CHEMIE GMBH whereof the solvent mixture of 2-methoxy-1-methylethylacetate, xylene and n-butylacetate was removed.

**Solsperse™ 36000** is a polymeric dispersant including an acidic polyester structure and which is available from NOVEON.

**SS36000** is a 30% solution of Solsperse™ 36000 in DPGDA, further also including 1 % of Stabi-1.

**DPGDA** is dipropyleneglycoldiacrylate available as Sartomer™ SR508 from SARTOMER.

**VEEA** is 2-(vinylethoxy)ethyl acrylate, a difunctional monomer available from NIPPON SHOKUBAI, Japan.

**M600** is dipentaerythritol hexaacrylate available as Miramer™ M600 from RAHN.

**Cupferron™ AL** is aluminium **N-**nitrosophenylhydroxylamine from WAKO CHEMICALS LTD.

**Stabi-1** is a mixture forming a polymerization inhibitor having a composition according to Table 2:

**Table 2**

| Component | wt% |
|---|---|
| DPGDA | 82.4 |
| p-methoxyphenol | 4.0 |
| 2,6-di-tert-butyl-4-methylphenol | 10.0 |
| Cupferron™ AL | 3.6 |

**Stabi-2** is identical to Stabi-1 with the exception that the monomer DPGDA was replaced by VEEA.

**EPD** is ethyl-4-(dimethylamino)benzoate available as Genocure™ EPD from RAHN.

**TPO** is 2,4,6-trimethylbenzoyl-diphenyl-phosphineoxide available as Genocure™ TPO from RAHN.

**Tego™ Rad 2100** is an acrylated polydimethylsiloxane-glycidolsiloxane surfactant available from EVONIK.

Measurement Methods

1. Redispersibility test

The transmission at 880 nm of an ink sample was measured while being submitted to a centrifugal force using LUMiSizer™ Dispersion Analyzer from L.U.M. GmbH. Accelerated sedimentation was possible by employing a centrifugal force (1,200 G). After sedimentation, the ink sample was reproducibly mechanically shaken for 60 seconds and the transmission at 880 nm was measured again. The fraction of sediment which could not be redispersed caused a higher transmission value being measured. A volume fraction of non-redispersible particles can be calculated from this measured transmission value. A software tool SEPview™ available from L.U.M. GmbH allows recording and evaluation of the transmission profiles as a function of time for 12 ink samples which can be measured simultaneously on the LUMiSizer™ Dispersion Analyzer.

The sample preparation and evaluation will now be discussed in more detail. Each ink sample was analyzed in tri-fold by adding 1.4 g of ink to a glass cuvette which was closed by cap. The ink in the glass cuvette was mixed for two seconds using a VF2 vortexer from Janke & Kunkel at its highest setting. The transmission of the ink samples were measured for 2 hours (250 transmission profiles of 30 seconds) at 3000 rpm, which roughly corresponds with 100 days unstirred storage at 1G.

After this first measurement run, the glass containers are mechanically shaken for 1 minute using a Griffin™ flask shaker and then after this redispersing treatment measured for a second time in the same manner.

The transmission profiles are recorded every 30 seconds over the full length of the ink container. Transmission is followed from the start of sedimentation (meniscus) in a window of 10 mm (111.7 mm to 121.7 mm). The SEPview™ software tool provides a % mean value of transmission which is indicative for sedimentation. When % mean value of transmission equals 0 % this means that all pigment particles are in the sediment, while 100 % means that no sediment of pigment particles is formed. The transmission of the $2^{nd}$ run $T_2$ is higher than the transmission of the $1^{st}$ run $T_1$ because part of the sediment could no be redispersed.

The equation (1) can be derived for the difference in transmission before and after mechanical shaking:

$$\ln (T_2 / T_1) = 3Qr (\phi_1 - \phi_2) / d \qquad \text{equation (1),}$$

wherein:

$T_1$ is the transmission value before mechanical shaking;
$T_2$ is the transmission value after mechanical shaking;
Q represents the scatter-efficiency;
r is the diameter of the cuvette;
d represents the particle diameter;
$\phi_1$ represents the volumetric fraction of particles before shaking; and
$\phi_2$ represents the volumetric fraction of particles after shaking.

The value of 3.Q.r / d is a constant and if arbitrarily set to a value of 1, then equation (2) becomes:

$$\phi_2 = - \ln (T_2 / T_1) + \phi_1 \qquad \text{equation (2).}$$

Assuming a transmission of 100 % at a volumetric fraction of 0 ($\phi_2 = 0$ at $T_2 = 100$), then the equation (3) is valid:

$$\phi_1 = \ln (100 / T_1) \qquad \text{equation (3).}$$

Combination of equations (2) and (3) results in equation (4):

$$\phi_2 = ( \ln (100/T_1) - \ln (T_2/T_1) \qquad \text{equation (4).}$$

The percentage sediment that could not be redispersed (%NRS) is then given by equation (5):

$$\%\text{NRS} = \ln (T_2/T_1) / \ln (100/T_1) \times 100 \% \quad \text{equation (5).}$$

The smaller the percentage value, the more sediment could be redispersed.

For a good redispersibility, the %NRS value should preferably be less than 5.0 %, more preferably even less than 3.0%.

2. Average Particle Size (Malvern)

A test sample was prepared by addition of one drop of inkjet ink to a cuvette containing 1.5 mL ethyl acetate and mixed until a homogenous sample was obtained. The measured particle size is the average value of 3 consecutive measurements consisting of 6 runs of 20 seconds.

The particle size of pigment particles in the inkjet ink was determined by photon correlation spectroscopy at a wavelength of 633 nm with a 4mW HeNe laser on a diluted sample of the ink. The particle size analyzer used was a Malvern™ nano-S available from Goffin-Meyvis.

3. Average Particle Size (Nicomp)

An ink sample is diluted with ethyl acetate to a pigment concentration of 0.002 wt%. The average particle size of pigment particles is determined with a Nicomp™ 30 Submicron Particle Analyzer based upon the principle of dynamic light scattering.

4. Viscosity

The viscosity of the colour inkjet inks was measured at 45° C using a "Robotic Viscometer Type VISCObot" from CAMBRIDGE APPLIED SYSTEMS.

**EXAMPLE 1**

This example illustrates how the redispersibility of inorganic colour inkjet inks can be improved by adding to the inorganic yellow colour pigment, a second inorganic colourless pigment of a specific size in a certain amount.

Preparation of Concentrated Pigment Dispersions

Three concentrated pigment dispersions PY-1 to PY-3 of the bismuth-vanadium oxide pigment PY184 having a mass density above 5 g/cm$^3$ were prepared using different dispersing methods commonly used for making inkjet inks for obtaining different dispersion qualities. In addition, a concentrated pigment dispersion PC-1 was prepared of a titanium dioxide pigment as inorganic colourless pigment.

Inorganic Yellow Pigment Dispersion PY-1

133 g of SS36000, 80 g of PY184 and 2.8 g of Stabi-1 were mixed into 184.2 DPGDA using a DISPERLUX™ dispenser. Stirring was continued for 30 minutes. The vessel was connected to a NETZSCH zeta-mill filled with 900 g of 0.4 mm yttrium stabilized zirconia beads ("high wear resistant zirconia grinding media" from TOSOH Co.). The mixture was circulated over the mill for 120 minutes (residence time of 45 minutes) and a rotation speed in the mill of about 10.4 m/s. During the complete milling procedure the content in the mill was cooled to keep the temperature below 40° C. After milling, the dispersion was discharged into a vessel. The resulting concentrated pigment dispersion PY-1 according to Table 3 exhibited an average particle size of 205 nm as measured with a Malvern™ nano-S and a viscosity of 42 mPa.s at 25° C and at a shear rate of 10 s$^{-1}$.

**Table 3**

| Component | wt% |
|-----------|-----|
| PY184 | 20 |
| SS36000 | 10 |
| Stabi-1 | 1 |
| DPGDA | 69 |

Inorganic Yellow Pigment Dispersion PY-2

A polyethylene ink container was filled with 33.3 g of SS36000, 20 g of PY184, 0.7 g of Stabi-1 and 46.0 g of DPGDA. Then 400 g of yttrium-stabilised zirconium oxide-beads of 3 mm diameter (" high wear resistant zirconia grinding media" from TOSOH Co.) were added to this pigment mixture. The ink container was closed with a lit and put on the roller mill for seven days with the rotation speed was set at 150 rpm. After milling the dispersion was separated from the beads by filtration. To the filtered pigment dispersion, the necessary components were added to obtain the same composition as the concentrated pigment dispersion PY-1 of Table 3. The resulting concentrated pigment dispersion PY-2 exhibited an average particle size of 485 nm as measured with a Malvern™ nano-S.

Inorganic Yellow Pigment Dispersion PY-3

A polyethylene ink container of 250 mL was filled with 33.3 g of SS36000, 20 g of PY184, 0.7 g of Stabi-1 and 46.0 g of DPGDA. Then 240 g of zirconium oxide-beads of 1 to 1.6 mm diameter (" high wear resistant zirconia grinding media" from TOSOH Co.) were added to this pigment mixture. The ink container was closed with a lit and put on the roller mill for eleven days with the rotation speed was set at 150 rpm. After milling the dispersion was separated from the beads by filtration. To the filtered pigment dispersion, the necessary components were added to obtain the same composition as the concentrated pigment dispersion PY-1 of Table 3. The resulting concentrated pigment dispersion PY-3 exhibited an average particle size of 409 nm as measured with a Malvern™ nano-S.

Inorganic Colourless Pigment Dispersion PC-1

A concentrated inorganic colourless pigment dispersion PC-1 was prepared having a composition according to Table 4.

**Table 4**

| wt% of : | PC-1 |
| --- | --- |
| RM300 | 30.0 |
| DB162 | 10.0 |
| Stabi-2 | 1.0 |
| VEEA | 59.0 |

The concentrated pigment dispersion PC-1 was made by mixing 3.6 Kg of VEEA, 3.0 kg of the pigment RM300, 67 g of the inhibitor Stabi-2 and 3,333 g of a 30% solution of the polymeric dispersant DB162 in VEEA in a vessel of 15 L using a DISPERLUX™ disperser (from DISPERLUX S.A.R.L., Luxembourg). The vessel was then connected to a Bachofen DYNO™-MILL ECM Pilot mill having an internal volume of 1.5 L filled for 42% with 0.4 mm yttrium stabilized zirconia beads ("high wear resistant zirconia grinding media" from TOSOH Co.). The mixture was circulated over the mill for 4 hours and 35 minutes at a flow rate of about 1.5 L per minute and a tip speed in the mill of about 13 m/s. The concentrated pigment dispersion PC-1 had an average particles size of 126 nm as measured with a Malvern™ nano-S and a viscosity of 102 mPa.s at 25° C and at a shear rate of 10 s$^{-1}$.

Preparation of Yellow Inkjet Inks

The inkjet inks Ink-1 to Ink-8 were prepared by mixing the components according to Table 5 and Table 6 under stirring for 60 minutes. The weight percentage (wt%) was based on the total weight of the inkjet ink.

**Table 5**

| wt% of : | Ink-1 | Ink-2 | Ink-3 | Ink-4 | Ink-5 |
| --- | --- | --- | --- | --- | --- |
| PY-1 | 40.00 | 40.00 | --- | --- | --- |
| PY-2 | --- | --- | 40.00 | 40.00 | 40.00 |
| PC-1 | --- | 3.33 | - | 3.33 | 8.33 |
| DPGDA | 29.17 | 27.84 | 29.17 | 27.84 | 24.84 |
| Stabi-1 | 0.73 | 0.73 | 0.73 | 0.73 | 0.73 |
| EPD | 5.00 | 5.00 | 5.00 | 5.00 | 5.00 |

(continued)

| wt% of : | Ink-1 | Ink-2 | Ink-3 | Ink-4 | Ink-5 |
|---|---|---|---|---|---|
| TPO | 10.00 | 10.00 | 10.00 | 10.00 | 10.00 |
| M600 | 15.00 | 13.00 | 15.00 | 13.00 | 11.00 |
| Tego™ Rad 2100 | 0.10 | 0.10 | 0.10 | 0.10 | 0.10 |

**Table 6**

| wt%of: | Ink-6 | Ink-7 | Ink-8 |
|---|---|---|---|
| PY-3 | 40.00 | 40.00 | 40.00 |
| PC-1 | --- | 3.33 | 8.33 |
| DPGDA | 29.17 | 27.84 | 24.84 |
| Stabi-1 | 0.73 | 0.73 | 0.73 |
| EPD | 5.00 | 5.00 | 5.00 |
| TPO | 10.00 | 10.00 | 10.00 |
| M600 | 15.00 | 13.00 | 11.00 |
| Tego Rad 2100 | 0.10 | 0.10 | 0.10 |

Evaluation and Results

The viscosity of each inkjet ink Ink-1 to Ink-8 was measured, together with the average particle size using a Nicomp™ 30 Submicron Particle Analyzer. A redispersability test was performed in which the amount of sediment (% mean value of transmission) and the percentage sediment that could not be redispersed (%NRS) were determined. All results are shown in Table 7.

**Table 7**

| Inkjet Ink | wt% of inorganic colourless pigment | Viscosity (mPa.s) | Average Particle size | % mean value of transmission | %NRS |
|---|---|---|---|---|---|
| Ink-1 | --- | 14.2 | 240 nm | 17.2 | 3.5 |
| Ink-2 | 1.0 | 14.4 | 231 nm | 8.8 | 0.4 |
| Ink-3 | --- | 15.5 | 390 nm | 43.8 | 38.4 |
| Ink-4 | 1.0 | 14.8 | 324 nm | 10.9 | 6.0 |
| Ink-5 | 2.5 | 14.2 | 262 nm | 7.0 | 2.3 |
| Ink-6 | --- | 14.5 | 328 nm | 51.4 | 63.5 |
| Ink-7 | 1.0 | 14.4 | 300 nm | 11.7 | 5.6 |
| Ink-8 | 2.5 | 14.1 | 294 nm | 6.3 | 2.9 |

From Table 7, it should be clear that the inkjet inks Ink-1, Ink-3 and Ink-6 lacking a small size inorganic colourless pigment not only exhibited a large amount of sediment, but also a large amount of sediment that could not be redispersed. In comparing the already well dispersed Ink-1 with Ink-2, the addition of 1 wt% of inorganic colourless pigment still results in a significant improvement in the sediment characteristics. The inkjet inks Ink-3 and Ink-6 of poor dispersion quality require preferably the addition of more than 2 wt% of inorganic colourless pigment for achieving excellent sediment characteristics. It should also be noted that the addition of inorganic colourless pigment does surprisingly not result in higher viscosities and clearly lowers the average particle size.

**EXAMPLE 2**

This example illustrates how the redispersibility of inorganic colour inkjet inks can be improved by adding to the inorganic blue colour pigment, a second inorganic colourless pigment of a specific size in a certain amount.

Preparation of Concentrated Pigment Dispersion

Using conventional dispersing methods for inkjet inks, two concentrated pigment dispersions PB-1 and PB-3 of the cobalt(II) oxide-aluminum oxide pigment PB28 having a mass density above 4 g/cm$^3$ were prepared.

The same concentrated pigment dispersion PC-1 of Example 1 was used for the dispersion of the inorganic colourless pigment.

Inorganic Blue Pigment Dispersion PB-1

A polyethylene ink container of 250 mL was filled with 33.3 g of SS36000, 20 g of PB28, 0.7 g of Stabi-1 and 46.0 g of DPGDA. Then 240 g of zirconium oxide-beads of 1 to 1.6 mm diameter (" high wear resistant zirconia grinding media" from TOSOH Co.) were added to this pigment mixture. The ink container was closed with a lit and put on the roller mill for eleven days with the rotation speed was set at 150 rpm. After milling the dispersion was separated from the beads by filtration. To the filtered pigment dispersion, the necessary components were added to obtain the composition of Table 8. The resulting concentrated pigment dispersion PB-1 exhibited an average particle size of 430 nm as measured with a Malvern™ nano-S.

**Table 8**

| Component | wt% |
|-----------|-----|
| PB28 | 20 |
| SS36000 | 10 |
| Stabi-1 | 1 |
| DPGDA | 69 |

Inorganic Blue Pigment Dispersion PB-2

133 g of SS36000, 80 g of PB28 and 2.8 g of Stabi-1 were mixed into 184.2 g DPGDA using a DISPERLUX™ dispenser. Stirring was continued for 30 minutes. The vessel was connected to a NETZSCH zeta-mill filled with 900 g of 0.4 mm yttrium stabilized zirconia beads ("high wear resistant zirconia grinding media" from TOSOH Co.). The mixture was circulated over the mill for 120 minutes (residence time of 45 minutes) and a rotation speed in the mill of about 10.4 m/s. During the complete milling procedure the content in the mill was cooled to keep the temperature below 40° C. After milling, the dispersion was discharged into a vessel. To the filtered pigment dispersion, the necessary components were added to obtain the same composition as the concentrated pigment dispersion PB-1 of Table 8. The resulting concentrated pigment dispersion PB-2 exhibited an average particle size of 213 nm as measured with a Malvern™ nano-S.

Preparation of Blue Inkjet Inks

The inkjet inks Ink-9 to Ink-14 were prepared by mixing the components according to Table 9 under stirring for 60 minutes. The weight percentage (wt%) was based on the total weight of the inkjet ink.

**Table 9**

| wt% of: | Ink-9 | Ink-10 | Ink-11 | Ink-12 | Ink-13 | Ink-14 |
|---------|-------|--------|--------|--------|--------|--------|
| PB-1 | 40.00 | 40.00 | 40.00 | --- | --- | --- |
| PB-2 | --- | --- | --- | 40.00 | 40.00 | 40.00 |
| PC-1 | --- | 3.33 | 8.33 | --- | 3.33 | 8.33 |
| DPGDA | 29.17 | 27.84 | 24.84 | 29.17 | 27.84 | 24.84 |
| Stabi-1 | 0.73 | 0.73 | 0.73 | 0.73 | 0.73 | 0.73 |

(continued)

| wt% of: | Ink-9 | Ink-10 | Ink-11 | Ink-12 | Ink-13 | Ink-14 |
|---|---|---|---|---|---|---|
| EPD | 5.00 | 5.00 | 5.00 | 5.00 | 5.00 | 5.00 |
| TPO | 10.00 | 10.00 | 10.00 | 10.00 | 10.00 | 10.00 |
| M600 | 15.00 | 13.00 | 11.00 | 15.00 | 13.00 | 11.00 |
| Tego™ Rad 2100 | 0.10 | 0.10 | 0.10 | 0.10 | 0.10 | 0.10 |

Evaluation and Results

The viscosity of the inkjet inks Ink-9 to Ink-14 was measured, together with the average particle size using a Nicomp™ 30 Submicron Particle Analyzer. A redispersability test was performed in which the amount of sediment (% mean value of transmission) and the percentage sediment that could not be redispersed (%NRS) were determined. All results are shown in Table 10.

**Table 10**

| Inkjet Ink | wt% of inorganic colourless pigment | Viscosity (mPa.s) | Average Particle size (nm) | % mean value of transmission | %NRS |
|---|---|---|---|---|---|
| Ink-9 | --- | 14.3 | 419 | 80.4 | 86.0 |
| Ink-10 | 1.0 | 14.1 | 258 | 10.6 | 3.7 |
| Ink-11 | 2.5 | 14.2 | 191 | 6.9 | 1.7 |
| Ink-12 | --- | 15.4 | 253 | 9 | 3.4 |
| Ink-13 | 1.0 | 14.7 | --- | 6.5 | 1.7 |
| Ink-14 | 2.5 | 15.1 | --- | 5.3 | 0.4 |

Table 10 shows that the addition of a small amount of inorganic colourless pigment to an inkjet ink containing a larger inorganic blue pigment drastically improves the sedimentation characteristics, i.e. a smaller amount of sediment formed which was practically fully redispersible.

**Claims**

1. A colour inkjet ink including an inorganic colour pigment having a colour selected from the group consisting of cyan, magenta, yellow, blue, green, red, orange, violet and brown; and at least 1 wt% of an inorganic colourless pigment based on the total weight of the colour inkjet ink, wherein the inorganic colourless pigment has a smaller average particle size than the inorganic colour pigment.

2. The colour inkjet ink according to claim 1, including at least 2 wt% of an inorganic colourless pigment and up to 15 wt% of an inorganic colour pigment both based on the total weight of the colour inkjet ink.

3. The colour inkjet ink according to claim 1 or 2, wherein the inorganic colourless pigment has an average particle size smaller than 150 nm as determined by photon correlation spectroscopy.

4. The colour inkjet ink according to any one of claims 1 to 3, wherein the inorganic colour pigment has an average particle size smaller than 250 nm as determined by photon correlation spectroscopy.

5. The colour inkjet ink according to any one of claims 1 to 4, wherein the inorganic colourless pigment is selected from the group consisting of titanium dioxide, zinc oxide, zinc sulfide, lead sulfate, antimony trioxide, kaolin, barium carbonate, zirconium oxide, calcium carbonate, barium sulfate, calcium sulfate, aluminium hydroxide, aluminium oxide, silicon dioxide, calcium phosphate, lithopone, zinc sulfide, magnesium sulfate, zinc phosphate, bismuth subnitrate, bismuth oxychloride, lead hydroxide carbonate and calcium metasilicate.

6. The colour inkjet ink according to any one of claims 1 to 5, wherein the inorganic colourless pigment has a platelet or needle shape.

7. The colour inkjet ink according to any one of claims 1 to 6, wherein the inorganic colour pigment is selected from the group consisting of consisting of C.I. Pigment Blue 28, C.I. Pigment Blue 36, Pigment Blue 72, C.I. Pigment Yellow 34, C.I. Pigment Yellow 35, C.I. Pigment Yellow 37, C.I. Pigment Yellow 42, C.I. Pigment Yellow 53, C.I. Pigment Yellow 119, C.I. Pigment Yellow 157, C.I. Pigment Yellow 158, C.I. Pigment Yellow 159, C.I. Pigment Yellow 160, C.I. Pigment Yellow 161, C.I. Pigment Yellow 162, C.I. Pigment Yellow 163, C.I. Pigment Yellow 164, C.I. Pigment Yellow 184, C.I. Pigment Yellow 189, C.I. Pigment Red 101, C.I. Pigment Red 102, C.I. Pigment Red 104, C.I. Pigment Red 108, C.I. Pigment Red 265, C.I. Pigment Green 48, C.I. Pigment Green 50, C.I. Pigment Brown 6, C.I. Pigment Brown 7, C.I Pigment Brown 24, C.I. Pigment Brown 29, C.I. Pigment Brown 31, C.I. Pigment Brown 33, C.I. Pigment Brown 34, C.I. Pigment Brown 35, C.I. Pigment Brown 37, C.I. Pigment Brown 39, C.I. Pigment Brown 40, C.I Pigment Brown 43, C.I Pigment Orange 20, C.I. Pigment Orange 75 and C.I. Pigment Green 50.

8. The colour inkjet ink according to any one of claims 1 to 7, wherein the colour inkjet ink is curable by UV radiation or e-beam radiation.

9. An inkjet printing method including the steps of:

   a) feeding an inkjet printhead with a colour inkjet ink including an inorganic colour pigment having a colour selected from the group consisting of cyan, magenta, yellow, blue, green, red, orange, violet and brown; and at least 1 wt% of an inorganic colourless pigment based on the total weight of the colour inkjet ink, wherein the inorganic colourless pigment has a smaller average particle size than the inorganic colour pigment; and
   b) jetting the colour inkjet ink with the inkjet printhead on an ink-receiver.

10. The inkjet printing method according to claim 9, wherein the colour inkjet ink includes at least 2 wt% of an inorganic colourless pigment and up to 15 wt% of an inorganic colour pigment both based on the total weight of the colour inkjet ink.

11. The inkjet printing method according to claim 9 or 10, wherein the inorganic colourless pigment has an average particle size smaller than 150 nm as determined by photon correlation spectroscopy.

12. The inkjet printing method according to any of claims 9 to 11, wherein the inkjet printhead is a throughflow inkjet printhead.

13. The inkjet printing method according to any of claims 9 to 12, wherein the colour inkjet ink in the ink-container is agitated.

14. The inkjet printing method according to claim 13, including a step c) of at least partially curing the jetted colour inkjet ink with UV radiation.

15. The inkjet printing method according to any of claims 9 to 12, wherein the ink-receiver has a printing surface made of metal, glass, stone, concrete or ceramics.

Europäisches
Patentamt

European
Patent Office

Office européen
des brevets

**EUROPEAN SEARCH REPORT**

Application Number

EP 12 18 2750

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 130 817 A1 (AGFA GRAPHICS NV [BE]) 9 December 2009 (2009-12-09) * paragraphs [0071] - [0073], [0077] - [0079], [0177], [0178] * | 1-15 | INV. C09D11/00 C09D11/02 |
| A | WO 2011/069943 A1 (AGFA GEVAERT [BE]; LOCCUFIER JOHAN [BE]) 16 June 2011 (2011-06-16) * paragraphs [0035], [0049], [0051] - [0054], [0076], [0080] * | 1-15 | |

TECHNICAL FIELDS
SEARCHED (IPC)

C09D

The present search report has been drawn up for all claims

| Place of search | Date of completion of the search | Examiner |
|---|---|---|
| Munich | 14 January 2013 | Feldmann, Gabriele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 12 18 2750

This annex lists the patent family members relating to the patent documents cited in  the above-mentioned European search report.
The members are as contained in the European Patent Office EDP file on
The European Patent Office is in no way liable for these particulars which are merely given for the purpose of information.

14-01-2013

| Patent document cited in search report | | Publication date | Patent family member(s) | | Publication date |
|---|---|---|---|---|---|
| EP  2130817 | A1 | 09-12-2009 | CN | 102056890 A | 11-05-2011 |
| | | | EP | 2130817 A1 | 09-12-2009 |
| | | | US | 2011063388 A1 | 17-03-2011 |
| | | | WO | 2009147057 A1 | 10-12-2009 |
| WO 2011069943 | A1 | 16-06-2011 | AU | 2010330040 A1 | 10-05-2012 |
| | | | CA | 2779560 A1 | 16-06-2011 |
| | | | CN | 102640055 A | 15-08-2012 |
| | | | EP | 2510400 A1 | 17-10-2012 |
| | | | US | 2012283349 A1 | 08-11-2012 |
| | | | WO | 2011069943 A1 | 16-06-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009029119 A, SEIREN
- US 2007115329 A
- EP 1911814 A
- EP 1857510 A
- US 6310115 B
- EP 2065362 A
- EP 2161264 A
- EP 2053101 A
- US 2006014848 A
- WO 2011069943 A

**Non-patent literature cited in the description**

- **J. V. CRIVELLO.** *Advances in Polymer Science,* 1984, vol. 62, 1-47
- **CRIVELLO, J.V. et al.** Photoinitiators for Free Radical Cationic. John Wiley and Sons Ltd, 1998, vol. III, 287-294